Europäisches Patentamt

European Patent Office

Office européen des brevets,

(19)

(11) Publication number: **0 229 722**
A2

## (12) EUROPEAN PATENT APPLICATION

(21) Application number: 87300334.7

(51) Int. Cl.⁴: **H 02 J 7/00**

(22) Date of filing: 15.01.87

(30) Priority: 15.01.86 GB 8600847
23.01.86 GB 8601657

(43) Date of publication of application:
22.07.87 Bulletin 87/30

(84) Designated Contracting States:
AT BE CH DE ES FR GB GR IT LI LU NL SE

(71) Applicant: Yang, Tai-Her
5-1 Taipin Street
Si-Hu Town Dzan-Hwa (TW)

(72) Inventor: Yang, Tai-Her
5-1 Taipin Street
Si-Hu Town Dzan-Hwa (TW)

(74) Representative: Arthur, Bryan Edward et al
Withers & Rogers 4 Dyer's Buildings Holborn
London EC1N 2JT (GB)

(54) Battery charging arrangements.

(57) A pair of jumper leads (1,2) for charging a vehicle battery, for example, incorporate a relay (RY301) which closes to establish current flow through the jumper leads only when the battery (not shown) is correctly poled with respect to the source of DC charging current (not shown). In the embodiment shown the winding RY1 is energised only when switching transistor Q1 is switched on, which requires that both the RED connectors of jumper lead 1 are connected to positive terminals and both the BLACK terminals of jumper lead 2 are connected to negative terminals. In other embodiments, relays or other switching arrangements are provided for reversing the connections in the event of an incorrect connection. The invention provides a delay circuit (3) which incorporates an RC timing circuit (R9. C9) arranged to switch on a silicon controlled rectifier (SCR9) via a switching transistor (Q9) only after a predetermined delay. This delay ensures that no sparks are generated while the connectors (RED. BLACK) are being connected to the battery terminals. which could in some circumstances ignite explosive gases In other embodiments the delay and the switching of the relays or other switching devices are both controlled by a microprocessor.

EP 0 229 722 A2

## Description

The present invention relates to battery charging arrangements of the type comprising a pair of conductors for conducting charging current to the battery and means for detecting the polarities of the conductors in relation to the polarities of the battery terminals to which they are connected. By providing a suitable relay or other switching arrangement actuated by the polarity detecting means, short circuiting of the battery can be prevented, either by causing the charging circuit to be broken or by causing the polarities of the conductors to be reversed in the event of a wrong connection to the battery.

The invention relates particularly but not exclusively to "jumper leads" for charging one vehicle battery from another vehicle battery and incorporating such protective circuitary.

The invention provides a jumper lead arrangement for charging a battery (B2), comprising first and second jumper leads (1,2) carrying respective first and second conectors (RED, BLACK) at their other end for connection to a D.C. power source (B1), and further comprising switching means (Ry) arranged to disconnect at least two of said connectors in response to a detected polarity condition of said connectors which would otherwise lead to a short circuit characterised by delay means (3, 4, C, C301, C302, CPU501, CPU502) arranged to inhibit the flow of current through said jumper leads for a sufficient time to enable said polarity condition to be detected.

By providing for a delay between connection of the charging circuits to the battery and the commencement of charging, sparking at the battery terminals is avoided. This is an important safety feature because in some cases explosive gases may be ignited by sparks at the battery terminals.

A number of embodiments of the invention will not be described by way of example only with reference to Figures 1 to 28 of the accompanying drawings, of which:

Figure 1 shows a polarity changing charging circuit in accordance with the invention;

Figure 2 shows a delay circuit which can be utilised in the circuit of Figure 1;

Figure 3 is a schematic elevation of one double coil relay which may be used in the circuit of Figure 1;

Figure 4 is a schematic elevation of another double coil relay which may be used in the circuit of Figure 1;

Figure 5 shows a further charging circuit in accordance with the invention;

Figure 6 shows a variant of the circuit of Figure 5;

Figure 7 shows a further variant of the circuits of Figure 5;

Figure 8 shows a further charging circuit in accordance with the invention;

Figure 9 shows a charging circuit similar to Figure 8 but with a specific delay circuit;

Figure 10 shows a further charging circuit in accordance with the invention;

Figure 11 shows a variant of a circuit shown in Figure 10;

Figure 12 shows a further variant of the circuit shown in Figure 10;

Figure 13 shows a further variant of the circuit shown in Figure 10;

Figure 14 shows a further variant of the circuit shown in Figure 10;

Figure 15 shows a further charging circuit in accordance with the invention;

Figure 16 shows a plot of charging current against time for the circuit shown in Figure 15;

Figure 17 shows a further charging circuit in accordance with the invention;

Figure 18 shows a further charging circuit in accordance with the invention similar to that shown in Figure 17;

Figure 19 shows a still further charging circuit in accordance with the invention similar to that shown in Figure 17;

Figure 20 shows a further charging circuit in accordance with the invention;

Figure 21 shows a further charging circuit in accordance with the invention; and

Figure 22 shows a further novel charging circuit;

Figure 23 shows a further novel charging circuit;

Figure 24 shows a further novel charging circuit;

Figure 25 shows a further novel charging circuit;

Figure 26 shows a further novel charging circuit in accordance with the invention; and

Figure 27 shows a further novel charging circuit.

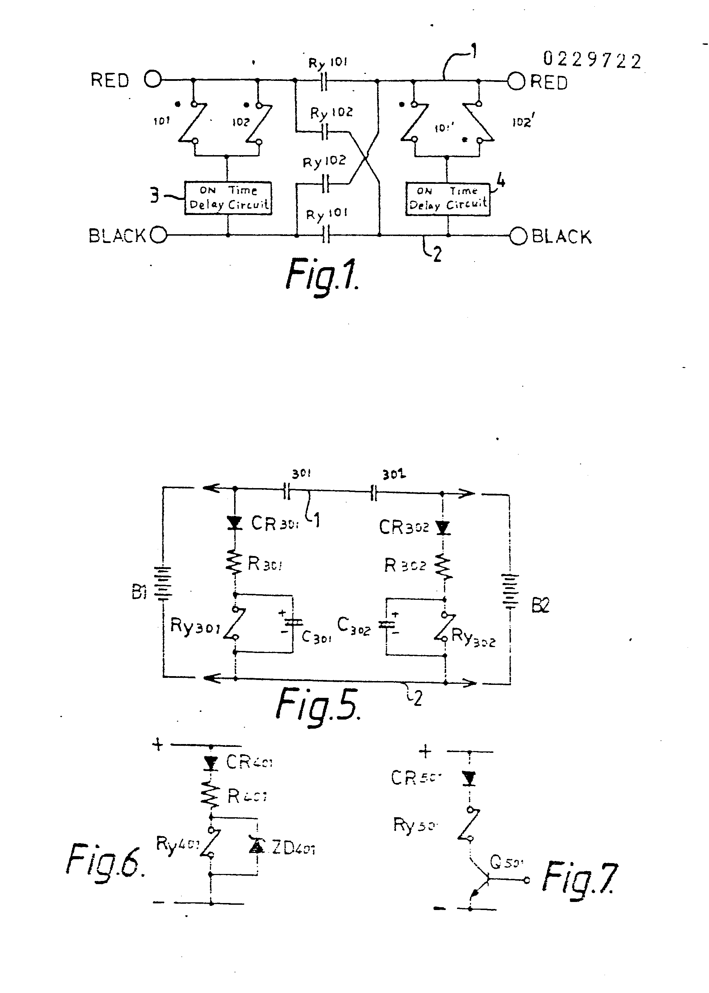

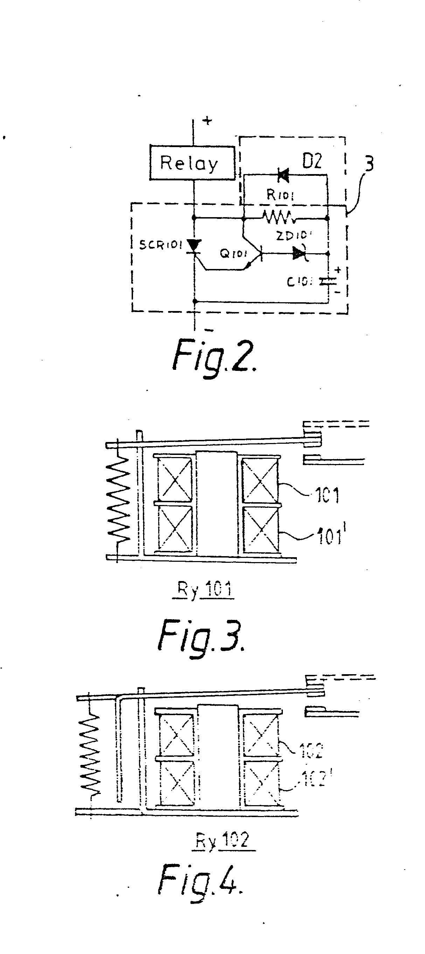

Referring to Figure 1, the circuit shown incorporates one double coil relay as shown in Figure 3 with two windings 101 and 101 prime which are wound in such a sense that it has to augment each other, and further incorporates a double coil relay as shown in Figure 4 which incorporates 2 windings 102 and 102 prime which oppose each other. Figure 1 shows two jumper leads 1 and 2 which in use are nominally conncted between the positive terminals and the negative terminals respectively of 2 vehicle batteries to enable one battery to charge the other. Accordingly, each end of jumper lead 1 carries at each end a connector labelled RED and each end of jumper leads 2 carries a BLACK connector. Each relay 101 and 102 carries 2 pairs of contacts; the contacts of relay 101 when closed, connect one RED connector to the other RED connector and one BLACK connector to the other BLACK connector whereas the contacts of relay 102, when closed connect the RED connector from one battery to the BLACK connector of the other, and vice-versa. The former situation applies when the connectors are correspondingly connected to the battery terminals and the latter situation applies when a reverse connection is made due to human error. This mode of operation is achieved by connecting corresponding ends of windings 101 and 101' to respective RED connectors and connecting the other ends to their respective BLACK connectors so that windings 101 and 101' augment one another and close the contacts of relays 101 only when each power of RED and BLACK connectors has the same polarity; conversely one end of winding 102 is connected to a RED connector and the corresponding end of the other winding 102' is connected to the BLACK connector so that these windings oppose one another when both RED connectors are connected to positive battery terminals and both BLACK connectors are connected to negative battery terminals that augment one another to close the contacts of relay 102 when one pair of RED and BLACK connectors is connected in the reverse sense to the other pair of RED and BLACK connectors. It will be noted that the arrangement shown in Figure 1 works equally well when both BLACK connectors are connected to positive battery terminals and both RED connectors are connected to negative battery terminals as when both RED connectors are connected to positive battery terminals and both BLACK connectors are connected to negative battery terminals. In accordance with the invention, the jumper lead arrangement shown in Figure 1 incorporates two delay circuits 3 and 4 which delay the building up of current in relay windings 101 and 102 on the one hand, and windings 101' and 102' on the other, by equal amounts. Accordingly, neither relay 101 nor relay 102 can close until a predetermined delay has elapsed after the connection of the 4 connectors to the respective battery terminals. The delay circuits 3 and 4 may be electronic or electromechanical in nature and suitably provide a delay which is sufficient to enable all 4 connectors to be connected to the terminals. As a result, no current flows until after all the connectors have been connected and so sparking between the connectors and the battery terminals is prevented.

Figure 2 shows an example of a suitable delay circuit 3 which comprises a series connected resistor R101 and capacitor C101 which form a RC delay circuit and are connected at their junction to the anode of a Zener Diode ZD101. When the potential at their junction reaches the Zener volatage, the Zener Diode triggers a transister Q101 which in turn fires a silicon controlled rectifier SCR101 which is connected in series with relay windings 101 and 102 or 101' and 102'. A bleeder diode D2 is connected in parallel with resistor R101 to re-set the delay circuit.

Figure 2 shows a simplified jumper leader arrangement in accordance with the invention connected between two batteries B1 and B2. This arrangement incorporates a pair of jumper leads 1 and 2, the former jumper lead incorporating 2 pairs of relay contacts 301 and 302 connected in series. Charging current flows from the charged battery (say B1) to the flat battery (say B2) only when the contacts of both relays RY301 and RY302 are closed. The winding of relay RY301 is connected in series with a resistor R301 and a diode CR301 between the connectors at one end of the pair of jump leads 1 and 2 and the winding of relay RY302 is similarly connected in series with a resistor R302 and a diode CR302 between the 2 connectors at the other end of the pair of jump leads, in the same sense. Accordingly, charging current flows only when both ends of jump lead 1 are connected to positive battery terminals and both ends of jump lead 2 are connected to negative battery terminals, as shown. Each relay winding is connected with in parallel with a capacitor C301 or C302. Each of these capacitors performs a dual function for its respective relay. Firstly, it capacitor forms an RC time delay circuit with its associated resister R301 or R302 and thus causes a delay in the build up of current through the respective relays and prevents a relay contact from closing until a short while after the jumper leads have been connected. Secondly, if the batteries are nearly flat, the capacitor discharges through its associated relay winding faster than it is charged and thereby causes its associated relay contacts to open. An on-off charging cycle results which prevents the discharged battery from being charged up at too high a rate.

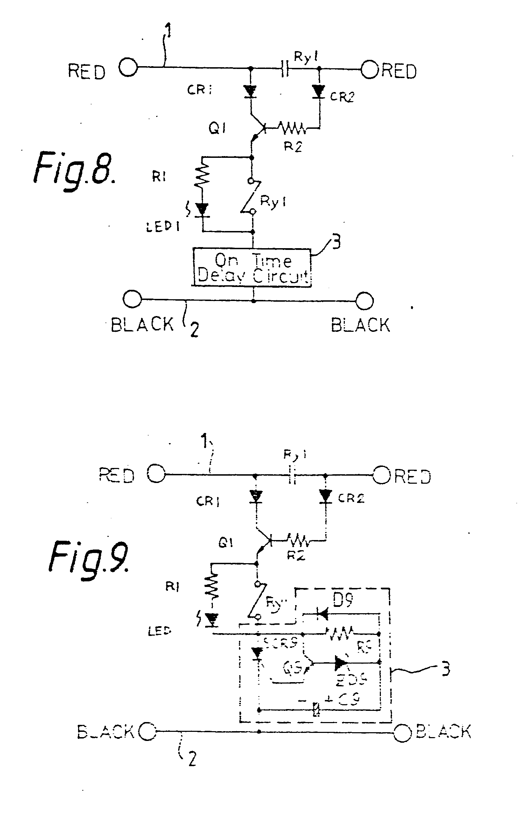

Figure 6 shows a variant of Figure 5 which is applicable to a low voltage relay. A Zener Diode ZD401 is connected in parallel with the relay winding RY401 and thereby limits the voltage applied to the relay winding.

Figure 7 shows a further variant of Figure 5 in which a transistor Q501 is connected in series with a high voltage relay winding RY501 and is arranged to ensure a constant current through the relay winding.

In both Figures 6 and 7 the actuation of the relay may be delayed by a delay circuit (not shown).

Figure 8 shows a further embodiment of the invention in which two jumper leads 1 and 2 for a charging circuit between batteries (not shown) connected between the two pairs of RED and BLACK connectors at their end only when both RED connectors are connected to positive terminals and both BLACK connectors are connected to BLACK negative terminals. This mode of operation is achieved by utilising a transistor Q1 whose base is connected where a resistor R2 and diode CR2 to one end of jumper lead 1 and whose collector is connected where a diode CR1 to the other end of jumper lead 1. The two ends of this jumper lead are normally separated by open relay contacts of relay RY1 and the emitter of transistor Q1 is connected to the other jumper lead 2 by the winding of relay RY1 and a delay circuit 3. Thus transistor Q1 switches relay RY1 and does so only when both ends of jumper lead 1 are positive with respect to jumper leads 2, i.e., when the negative terminal of one battery is connected to a black connector and the corresponding positive terminal is connected to the corresponding red connector and the positive and negative terminals of the other battery are similarly connected to the remaining red and black connectors respectively. This is a particularly economical arrangement because it requires only one relay. A series connected resistor R1 and LED, LED1 are connected in parallel with the relay winding so that the LED indicates when the correct polarity is established.

Figure 9 shows a variant of Figure 8 with a specific delay circuit shown; it will be seen that this is precisely similar to the delay circuit 3 shown in Figure 2.

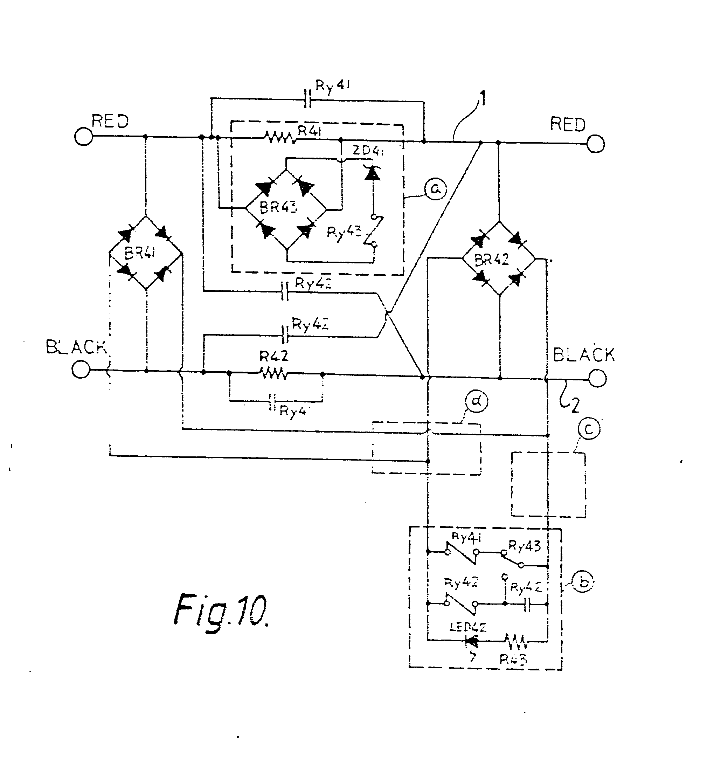

Figure 10 shows a further embodiment of the invention and as in the previous embodiments comprises a first relay RY41 which when closed connects the red connectors of jumper lead 1 together and the black connectors of jumper lead 2 together, and a second relay RY42 which connects the red connector of jumper lead 1 to the black connector of jumper lead 2 and vise versa when each contacts are closed. The contacts of both these relays are normally open. A detecting circuit a is connected across a resistor R41 in series in the jumper lead 1 and operates a polarity detecting relay RY43. This polarity detecting relay selects which of relays RY41 and RY42 are to be activated. Detecting circuit a operates as polarity detector. When one battery (not shown) is connected in reverse fashion to the red and black connectors of the jumper leads with respect to the other battery, the voltage across resistor R41 is nearly equal to the sum of the battery voltages (because this resistor has a much greater value than resistor R42 in series in jumper leads 2). When however both batteries are connected to the jumper leads in the same sense (i.e. positive terminal to red connector in both cases or positive terminal to black connector in both cases) than the voltage across resistor R41 is approximately equal to the difference between the two battery voltages. In the former case. the high voltage across the resistor R41 is rectified by a bridge circuit BR43 and is sufficient to overcome the zener voltage of a zener diode ZD41 which is connected in series with relay RY43. Accordingly RY43 is activated. In the latter case. when both batteries are correctly connected, the voltage difference is insufficient to overcome the zener voltage and RY43 is not activated. The contacts of RY43 are shown in circuit b and it will be seen that RY43 normally selects the winding of relay RY41. When. however, detecting circuit a detects a reverse connection of the batteries RY43, selects the winding of relay RY42 which, being connected in series with a pair of its own contact (circuit b) immediately latches into its ON position. This latching is necessary because when relay RY42 is activated, resistor R41 is by-passed and therefore no longer causes relay RY43 to be activated. Power to drive the windings of relays RY41 and RY42 in circuit b is supplied by two bridge rectifiers BR41 and BR42. the DC ends of which being connected in parallel and the AC ends are connected to the respective ends of the pair of jumper leads. Accordingly power is supplied to circuit b whenever a battery is connected between a pair of red and black terminals. irrespective of its polarity. An LED 42 in series with a resistor R43 indicates when a battery is connected between the jumper leads. In accordance with the invention, this charging circuit incorporates a time delay circuit c which has not been shown in detail but is connected in series with circuits b.

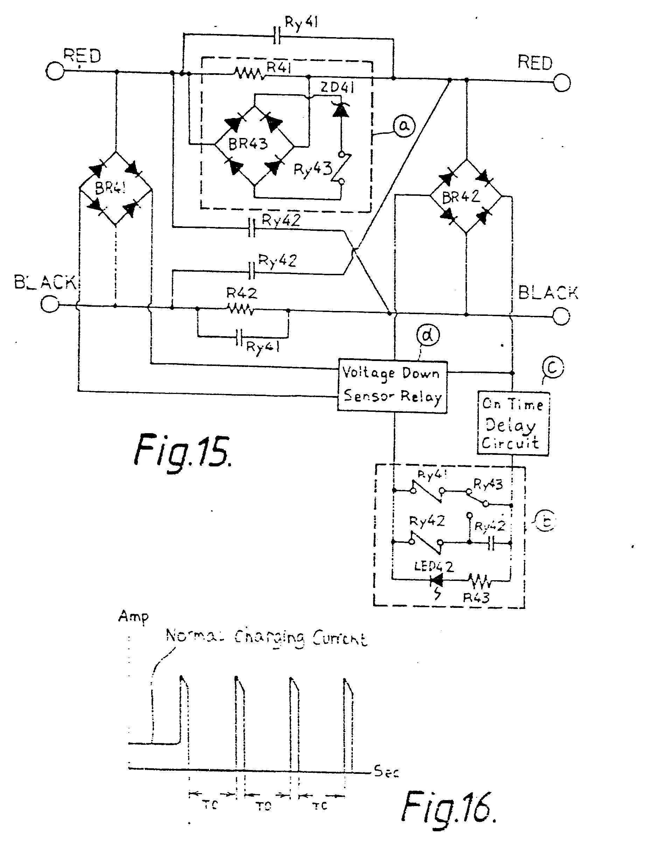

Circuit d detects when the voltage drop across the two jumper leads 1 and 2 is excessive. which corresponds to an excessive charging current. In such a case, this circuit switches off circuit b and hence switches off the relays RY41 and 42 in an intermittent fashion to chop the charging current as shown in Figure 16.

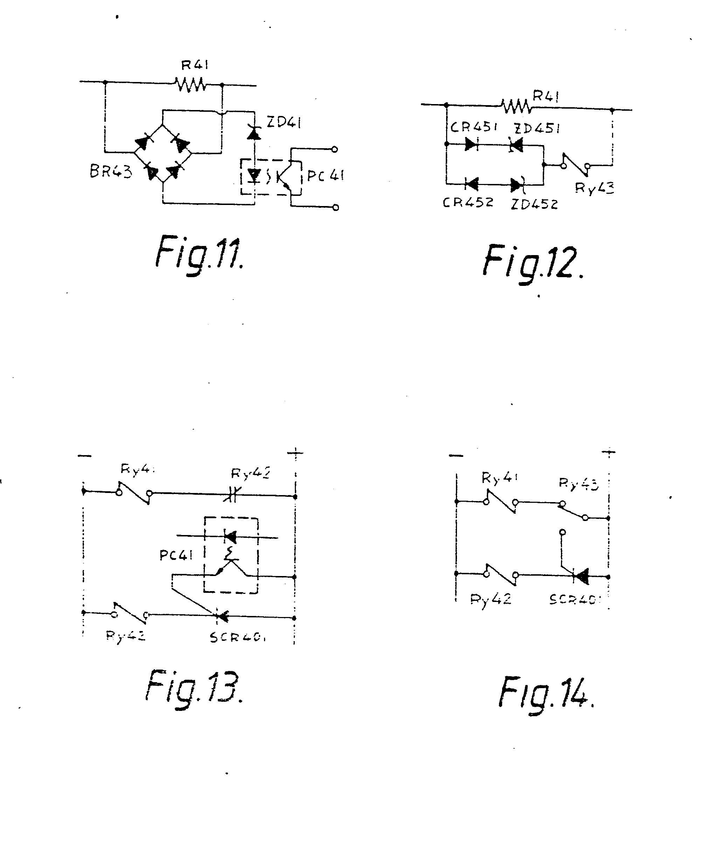

Figure 11 shows a variant of detecting circuit a of Figure 10 in which a photocoupler PC41 replaces polarity detecting relay RY43.

Figure 12 shows a further variant of this circuit a in which two of the diodes in bridge BR43 are replaced by zener diodes ZD451 and ZD452 which are in series with conventional diodes CR451 and CR452 respectively. These diode-zener diode pairs are connected in reverse parallel and thus pass current through winding RY43 only when the voltage drop across resistor R41 exceeds a predetermined value.

Figure 13 shows a variant of circuit b of Figure 10 in which the contacts of relay RY42 are normally closed. Figure 13 shows the positive and negative leads from the common DC side of bridges BR41 and BR42 and incorporates a photocoupler PC41 as shown in Figure 11. This photocoupler is on when the batteries are reverse connected and latches silicon controlled rectified SCR401 on in this state, thereby enabling relay RY42 to close the normally open contacts of this relay shown in Figure 10 and closing the normally open contacts of this relay as shown in Figure 13 to disable relay RY41. Because of the latching behaviour of the silicon controlled rectifier SCR401, no specific latching arrangement of the type shown in Figure 10 (circuit b) is required in this variant.

Figure 14 shows a further variant of circuit b in which a silicon controlled rectifier SCR401 is switched on by actuation of relay RY43.

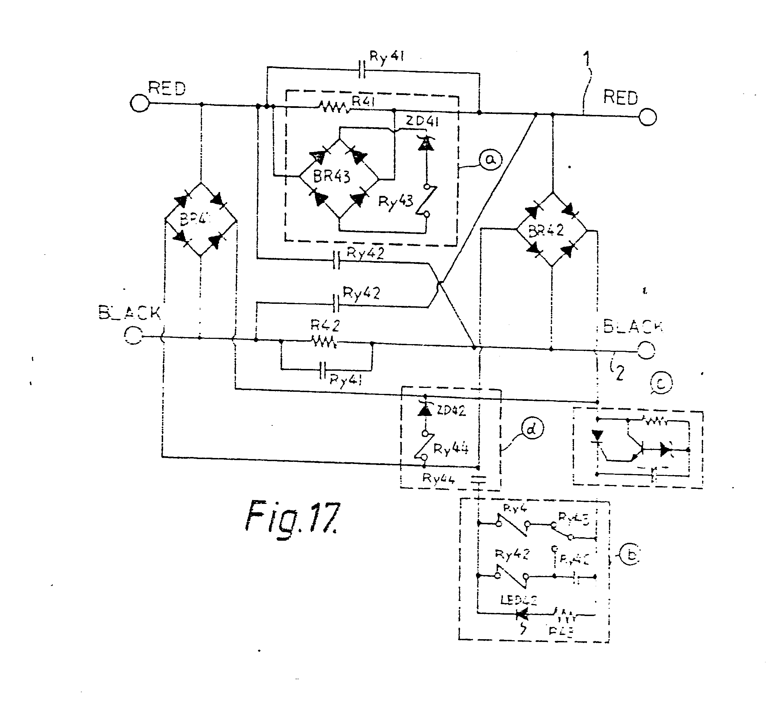

Figures 15 and 17 show a charging circuit very similar to that shown in Figure 10 but with the disabling circuit d and delay circuit c in successively greater detail. Referring to Figure 17. delay circuit c is precisely similar to that shown in box 3 of Figure 2. The disabling circuit d comprises a zener diode ZD42 in series with a relay RY44 when the voltage between the jumper leads 1 and 2 falls below a preset value corresponding to the zener voltage of ZD42. the normally open contact of relay RY44 are no longer held closed and the control circuit b which actuates the relays RY41 and RY42 is deactivated.

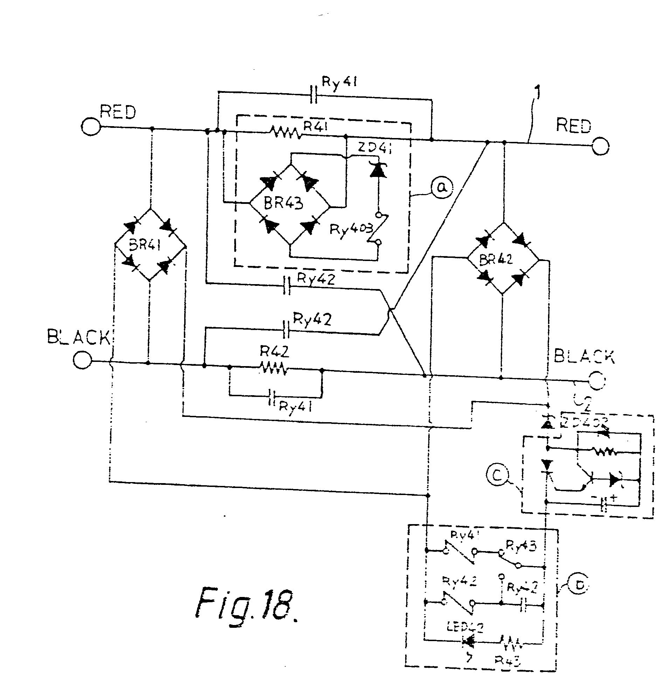

Figure 18 shows a simpler version of this circuit in which a zener diode ZD402 replaces circuit d.

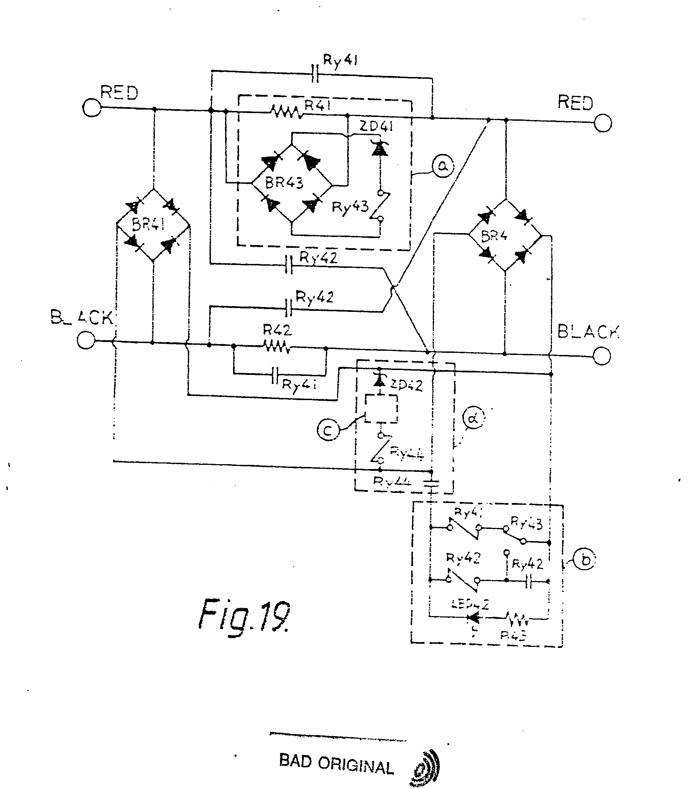

Figure 19 shows a further variant in which delay circuit c (for example as shown in Figure 18) is incorporated within circuit d; optionally. relay RY44 can be omitted.

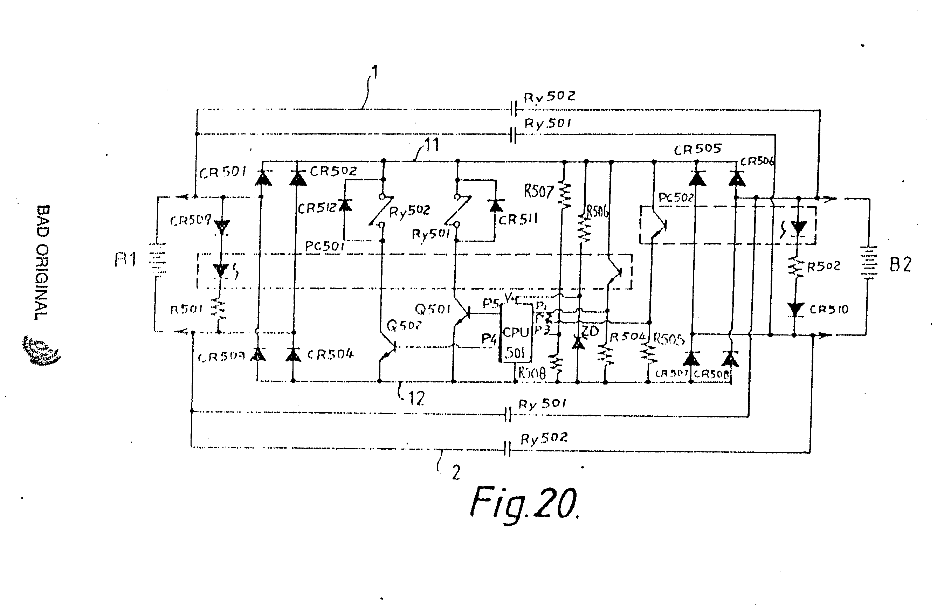

Figure 20 shows a further embodiment of the invention which utilises a microprocessor CPU501. In this embodiment relay RY502 closes when both batteries are correspondingly poled as shown in the diagram and relay RY501 closes to reverse the contacts at the ends of jumper leads 1 and 2 when the two batteries B1 and B2 are oppositely poled. As in the embodiments described above. the arrangement utilises two bridge rectifiers. namely. CR501, CR502, CR503 and CR504 connected between jumper leads 1 and 2 at one end. and CR505. CR506, CR507 and CR508 connected between the jumper leads at their other end, the positive DC outputs of these bridge rectifiers being connected by conductor 11 and the negative terminals of these bridge rectifiers being connected by conductor 12. Thus conductor 11 is always positive with respect to conductor 12 whenever a batter is connected at either end of jumper leads 1 and 2. A photocoupler PC501 has its input connected across the left hand end of jumper leads 1 and 2 their diodes CR509 and R501 and has its output connected in series with a resistor R504 between conductors 11 and 12. This photocoupler switches on input $P_1$ of CPU501 when battery B1 is connected between the jumper leads as shown. Similarly photocoupler PC502 has its input connected in series with resistor R502 and diode CR510 between the right hand ends of jumper leads 1 and 2 and has its output connected in series with resistor R505 between conductors 11 and 12. This photocoupler switches on input $P_2$ of CPU501 when battery B2 is connected between the right hand ends of jumper leads 1 and 2 in the polarity shown. CPU501 has a further input $P_3$ which is connected to the junction of series connected resistors R507 and R508 between conductors 11 and 12. This input provides a charging current for timing purposes. Input V+ is connected to the junction of resistor R506 and zener diode ZD which are in turn connected between conductors 11 and 12; this input detects overload of the system.

CPU501 operates as follows. When inputs P1 and P2 have the same polarity, an output signal is generated at P4 which operates switching transistor Q502 which in turn switches on relay RY502. When inputs P1 and P2 have different polarities, an output signal is generated at P5 which switches on transistor Q501 which in turn switches on relay RY501. The outputs from P4 and P5 are controlled by the input from P3 to cause only a small current flow through jumper leads 1 and 2 initially, thereby preventing a spark. The delay in reaching full charging current may be implemented by means of a timing circuit which counts clock pulses NDCPU, for example. Outputs P4 and P5 are further gated by the input V+ which disables them in the event of an overload.

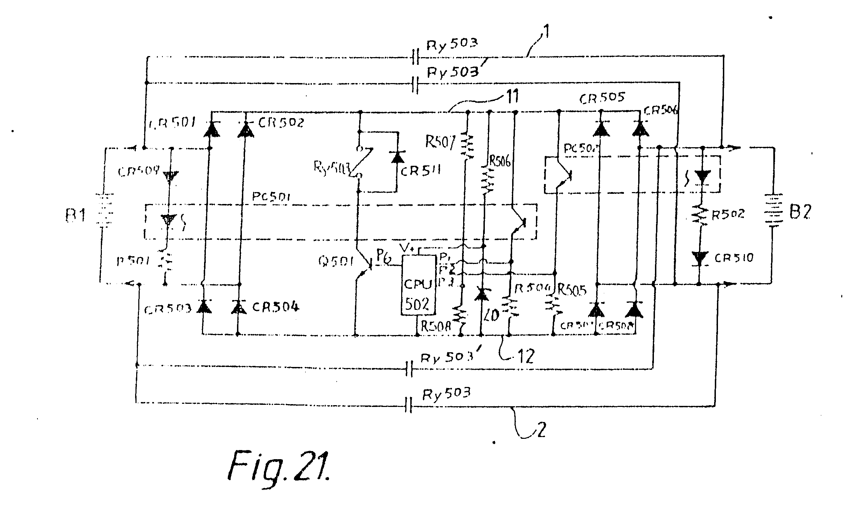

Figure 21 shows a variant of the circuit shown in Figure 20 in which only one relay, namely, RY503 is employed. This has a pair of normally closed relay contacts RY503 and a pair of normally open relay contacts RY503'. A microprocessor CPU502 generates an output at P6 only when there is a difference between the inputs at $P_1$ and $P_2$, so that relay RY503 closes contacts RY503' and opens contacts RY503 when batteries B1 and B2 are connected between jumper leads 1 and 2 in opposite senses. The delay and overload functions of CPU502 are similar to those described above with reference to Figure 20.

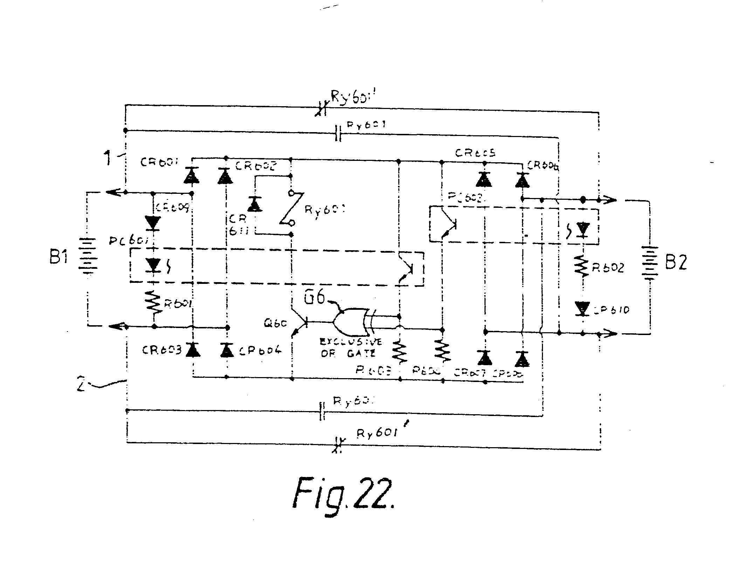

Figure 22 shows a novel jumper lead arrangement comprising two jumper leads 1 and 2 connected between two batteries B1 and B2, one of which is used to charge the other. This arrangement utilises a single relay having a winding RY601 and two pairs of normally open contacts RY601 which when closed connect the left hand end of jumper lead 1 to the right hand end of jumper lead 2 and vise versa; the relay also incorporates two pairs of normally closed contacts RY601' which in their normal closed position connects the left hand and right hand ends of jump lead 1 and the left hand and right hand ends of jump lead 2. Thus when batteries B1 and B2 are correspondingly poled the relay winding RY601 is not required to be energised; only when the batteries are reversed poled does this relay need to be energised, to close contacts RY601. The polarities of the two batteries are detected by respective photocouplers PC601 and PC602, the former being connected in series with a diode CR609 and resistor R601 between the connectors at the left hand ends of jump leads 1 and 2 and the latter photocoupler being connected in series with a resistor R602 and diode CR610 between the connectors at the right hands ends of the jump leads. Each of these photocouplers is supplied with DC power by a respective bridge rectifier (CR601, CR602, CR603, CR604; CR605, CR606, CR607, CR608), the DC ends of which are connected in parallel and the AC ends of which are connected between the respective ends of the jumper leads. Thus these bridge rectifiers can supply power to the photocouplers PC601 and PC602, the orgate G6 and the relay RY601.

When one of the inputs of gate G6 is high and the other is low, the output is high and switching transistor Q601 is switched on, thereby energising the relay winding RY601, which pulls in contacts RY601 and opens contacts RY601' to enable charging to take place between the oppositely poled batteries B1 and B2. When the batteries are correspondingly poled, the inputs to or gate G6 are both high and its output is low so that relay winding RY601 is not energised and relay contacts RY601' remain closed.

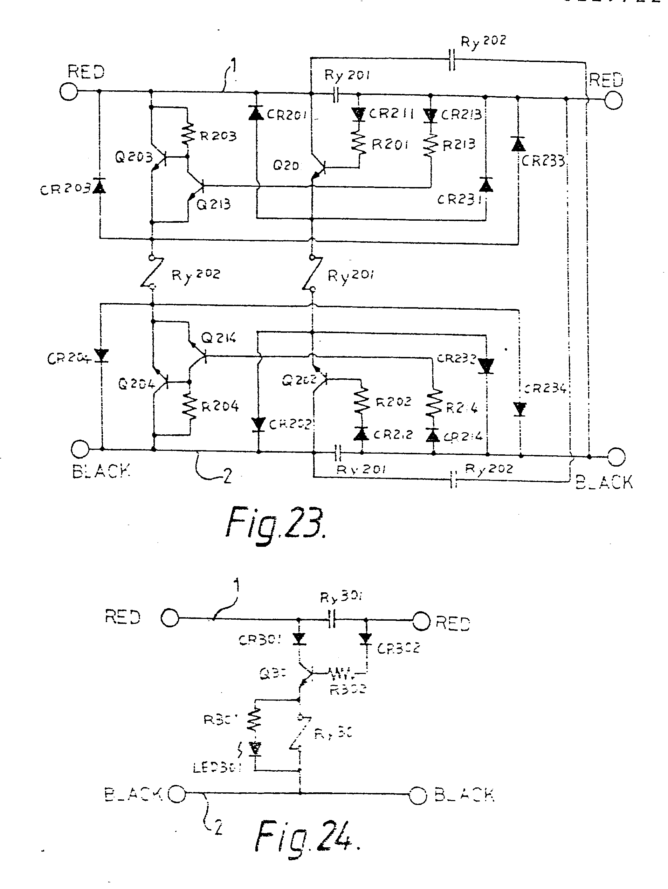

Figure 23 shows a further novel jump lead arrangement in which jump leads 1 and 2 are provided with a first relay RY201 having two sets of normally open contacts connected in series in jump leads 1 and 2 respectively, and a second relay RY202 which again has two pairs of normally open contacts which connect between the red connector of jump lead 1 and the black connector of jump lead 2 and the red connector of jump lead 1 and the black connector of jump lead 2 respectively. Relay RY201 closes when batteries are connected between the two pairs of red and black terminals with the same polarity whereas relay RY202 closes when the batteries are connected with reverse polarity. Relay RY201 has two switching transistors connected in series with its winding, namely, Q201 and Q202, each of which is switched on only when both its collector and its base (connected to an associated jumper lead their resistor and diode R201, CR211 or R202, CR212) are positive with respect to its emitter. It will be noted that these two inputs are on opposite sides of the relay contacts RY201 and thereby switch on the switching transistors only when batteries (not shown) are connected to the red and black connectors at either end of the jump leads with the same polarity. Q201 switches on when the red terminals are both positive and Q202 switches on when the black terminals are both positive. A current path for transistor Q201 is provided through relay winding RY201 and diodes CR202 and/or CR232. Similarly the current path for transistor Q202 is provided by relay winding RY201 and diode CR201 and/or CR231.

Cross-over relay RY202 is controlled by two switches, comprising switching transistor Q203, R203 and switching transistor Q213 on the one hand, and switching transistors Q204 and Q214 and resistor R204 on the other. These two switches have their control inputs connected to a resistor and diode pair (R213, CR213; R214, CR214 which is connected to an associated jump lead on the opposite side of relay contacts RY201 to the respective collectors of transistors Q203 and Q204. These two switches are switched off when the red connectors of the jumper leads are of the same polarity and the black connectors are the same polarity, i.e. when batteries (not shown) are connected between the jumper leads with corresponding polarity. Conversely one or other of these switches is switched on when batteries are connected with reverse polarity, the current path through transistor Q203 being completed by diode CR204 and/or diode CR234 and the current path through transistor Q204 being completed by diode CR203 and/or diode CR233.

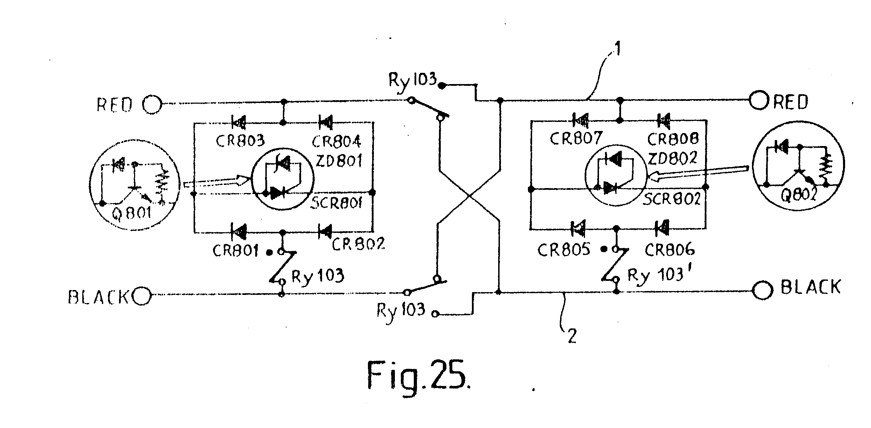

Figure 24 shows a further novel jump lead arrangement utilising a single relay RY301 with normally opened contacts. A switching transistor Q301 has one input to the other diode CR301 connected to the red connector of jump lead 1 and another input to its base the resistor R302 and diode CR302 connected to the other red connector of jump lead 1. Only when both red connectors of jump lead 1 are positive with respect to jump leads 2 does switching transistor Q301 conduct, and energise relay winding RY301 to close the contacts and allow normal charging. In any other circumstances (i.e. reverse connection of batteries) the relay contacts RY301 remain open and current flow through the jump leads is prevented. A light emitting diode LED301 in series with resistor R301 indicates when relay RY301 is energised i.e. when the batteries are connected correctly between the two jump leads.

Figure 25 shows a further novel jump lead arrangement comprising jump leads 1 and 2 and comprises two bridge rectifier arrangements CR801, CR802, CR803, CR804 and CR805, CR806, CR807, CR808. These provide power to the two windings RY103 and RY103' of a two poled two position relay RY103 which normally has its contacts closed in the cross-over position as shown in the figure. Relay windings RY103 and RY103' are disposed so as to cooperate with another as shown in Figure 3. Thus the relay is energised only when the magnetic field of these windings cooperate. These windings cooperate only when the RED and BLACK connectors at the left hand end of the jump leads 1 and 2 have the same polarity as the right hand RED and BLACK connectors at the right hand end of jump leads 1 and 2 and cause relay RY103 to switch over from the position shown. The relay windings are each controlled by a semi-conductor switch which may comprise an SCR connected to a zener diode as shown or alternatively a switching transistor controlled by a zener diode and resistor whose junction is connected to its base as shown in the enlarged circles. The semi-conductor switches ensure that the relay windings are turned fully on or fully off and thus improve the switching of this arrangement.

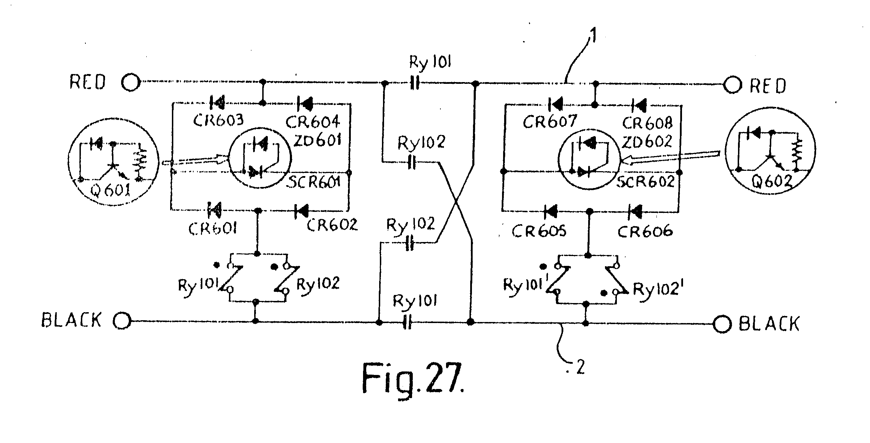

Figure 27 shows a further novel jump lead arrangement in accordance with the invention, and comprises two bridge rectifier circuits CR701, CR702, CR703, CR704 and CR705, CR706, CR707, CR708 to provide power to respective delay circuits 3 and 3' of the type already described hereinabove. These delay circuits delay the switching of respective pairs of relay windings RY101, RY102, RY101', RY102'. Windings RY101 and RY101' are incorporated in relay RY101 which provides for conduction through jumper leads 1 and 2 when the red and black terminals at the left hand end of the jump leads are correspondingly poled to the red and black terminals of the right hand end of the jump leads. Similarly windings RY102 and RY102' are incorporated in relay RY102 which provides for conduction through the jump leads when the two pairs of red and black terminals are oppositely poled. These relays operate in a precisely similar fashion to the relays described above with reference to Figure 1.

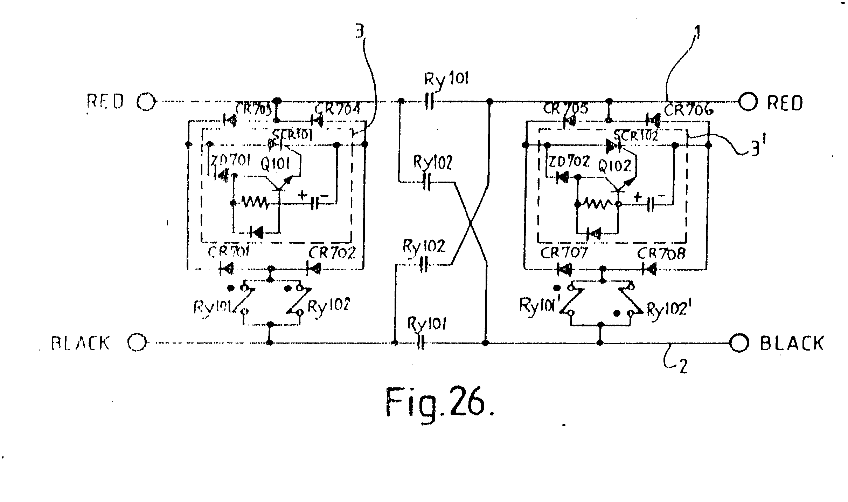

Figure 27 shows a jump lead arrangement similar to that shown in Figure 26 but again incorporates relays RY101 and RY102 which operate similarly to those described above with reference to Figure 1, and instead of having delay circuits 3 and 3' connected between the DC terminals of the bridge rectifiers in series with the relay windings, it incorporates semi-conductor switches comprising either a silicon controlled rectifier and zener diode or a switching transistor whose base is connected to the junction of a series connected zener diode and resistor. These switches switch full on at a predetermined voltage and ensure that conduction takes place through the jump lead only when a battery is at or above a predetermined voltage corresponding to the zener voltage of the zener diode.

It will be appreciated that the circuits described above with reference to Figures 1 to 21 and 26 possess other novel features besides the delay circuit 3 and that the circuits described with reference to Figures 22 to 25 and Figure 27 also possess novel features.

## Claims

1. A jumper lead arrangement for charging a battery (B2), comprising first and second jumper leads (1,2) carrying respective first and second connectors (RED,BLACK) at one end for connection to the terminals of said battery (B2) and carrying respective third and fourth connectors (RED,BLACK) at their other end for connection to a DC power source (B1), and further comprising switching means (RY) arranged to disconnect at least two of said connectors in response to a detected polarity condition of said connectors which would otherwise lead to a short circuit; characterised by delay means (3,4,C,301,302,CPU501, CPU502) arranged to inhibit the flow of current through said jumper leads for a sufficient time to enable said polarity condition to be detected.

2. A jumper lead arrangement as claimed in Claim 1 in which said switching means (RY) is arranged to reverse connections between the opposite ends of said jumper leads (1,2) in response to detection of said polarity condition.

3. A jumper lead arrangement as claimed in Claim 2 wherein said switching means comprises a first 2-pole relay (RY101) arranged to establish current flow when said first and second, and third and fourth connectors are poled in the same sense, and a second 2-pole relay (RY102) arranged to establish current flow when said said first and second, and third and fourth connectors are oppositely poled, each of said relays having a pair of windings (101,101'/102,102') disposed so that neither relay operates unless its windings generate cooperating magnetic fields, one winding of each pair being energised from said first and second connectors and the other winding of each pair being energised from said third and fourth connectors.

4. A jumper lead arrangement as claimed in Claim 1 wherein said switching means comprises a single switching device (RY1) having a single pair of terminals in series in said first jumper lead (1) and a semiconductor device (Q1) having a control terminal connected via a unidirectional path to said first jumper lead on one side of said terminals, another terminal connected via a unidirectional path to said first jumper lead on the other side of said terminals, and its other terminal connected to said second jumper lead (2) via at least one other terminal of said switching device, thereby to switch on said switching device only when both said first and third connectors have the same polarity with respect to said second jumper lead.

5. A jumper lead arrangement as claimed in any preceding claim wherein said delay means comprises at least one semiconductor switching device (Q101, SCR101) arranged to be triggered by an R-C timing circuit (R101, C101).

6. A jumper lead arrangment as claimed in any preceding claim, comprising a resistor (R41) connected in series in one of said jumper leads (1), circuit means (a) being responsive to the voltage drop across said resistor to control a further switching device (RY43) accordingly.

7. A jumper lead arrangement as claimed in Claim 6 as dependent upon Claim 2 or Claim 3, further comprising a first 2-pole switching device (RY41) arranged to establish current flow when said first and second, and third and fourth connectors are correspondingly poled and a second 2-pole switching device (RY42) arranged to establish current flow when said first and second, and third and fourth connectors are oppositely poled, said 2-pole switching devices being energised by a control circuit (b) which is responsive to the state of said further switching device (RY43) and is energised via commoned DC terminals of two bridge rectifiers (BR41, BR42), the AC terminals of said bridge rectifiers being connected to said first and second, and third and fourth connectors respectively, said delay means (c) being arranged to inhibit energisation of said control circuit (b) for a predetermined period.

8. A jumper lead arrangement as claimed in any preceding claim, comprising means (d) for preventing current flow through said jumper leads (1,2) when the voltage across them falls below a predetermined value.

9. A jumper lead arrangement as claimed in any preceding claim comprising means arraged to periodically interrupt current flow through said jumper leads to limit the rate of charging.

10. A jumper lead arrangement as claimed in any preceding claim wherein said delay means comprises a microprocessor (CPU501, CPU502), said microprocessor further being arranged to generate at least one control signal (P4, P5) in dependence upon the relative polarities of the first and second, and third and fourth connectors.

Fig.1.

Fig.5.

Fig.6.

Fig.7.

Fig.2.

Ry 101

Fig.3.

Ry 102

Fig.4.

*Fig.8.*

RED ○———————Ry1———○RED

CR1    CR2

Q1    R2

R1

LED1    Ry1

On Time
Delay Circuit    3

BLACK ○————————————○ BLACK
2

*Fig.9.*

RED ○———————R,1———○RED

CR1    CR2

Q1    R2

R1

LED    Ry1

D9
SCR9    R9
Q9    ZD9
+ C9    3

BLACK ○————————————○BLACK
2

Fig.10.

**Fig.11.**

**Fig.12.**

**Fig.13.**

**Fig.14.**

Ry41

RED                                                                RED

R41

ZD41

BR43                    (a)

Ry43

BR41                                                    BR42

Ry42

Ry42

R42

BLACK                                                              BLACK

Ry41

(d)

Voltage Down
Sensor Relay                    (c)

On Time
Delay
Circuit

## Fig.15.

Ry41        Ry43

Ry42        Ry42        (e)

LED42        R43

Amp

Normal Charging Current

Sec

Tc        To        Tc

## Fig.16.

Fig.17

*Fig.18.*

Fig.19.

0229722

BAD ORIGINAL

Fig.20.

BAD ORIGINAL

Fig.21.

0229722

Fig.22.

0229722

Fig.23.

Fig.24.

**Fig.25.**

0229722

Fig.26.

0229722

Fig.27.